# EUROPÄISCHE PATENTSCHRIFT

(11) **EP 2 145 811 B1**
(45) Veröffentlichungstag und Bekanntmachung des Hinweises auf die Patenterteilung: **24.10.2012**
(21) Anmeldenummer: 09007608.4
(22) Anmeldetag: 09.06.2009
(51) Int. Cl.: B62D 3/12, F16J 3/04

(54) **Elektrische Servolenkung mit Entlüftung**
Electric power steering with ventilation
Direction assistée électrique dotée d'une aération

(30) Priorität: 18.07.2008 DE 102008033879
(43) Veröffentlichungstag der Anmeldung: 20.01.2010
(73) Patentinhaber: ThyssenKrupp Presta AG, 9492 Eschen (LI)
(72) Erfinder: Rombold, Manfred, 71364 Winnenden-Höfen (DE)
(74) Vertreter: Lenzing Gerber Stute

(56) Entgegenhaltungen:
- EP-A2- 1 114 711
- WO-A1-2006/100261
- DE-A1- 10 207 466
- US-A- 3 041 885
- US-A- 4 629 641

## Beschreibung

Die vorliegende Erfindung betrifft eine Servolenkung mit den Merkmalen des Oberbegriffs des Anspruchs 1.

Elektrische Servolenkungen weisen im Gegensatz zu hydraulischen Servolenkungen ein relativ großes inneres Luftvolumen auf, welches durch Getriebe und Antrieb hervorgerufen wird. Nach außen sind Servolenkungen im Bereich der beweglich gelagerten Zahnstange durch Faltenbälge verschlossen, um das Eindringen von Wasser und Fremdkörpern in die Servolenkung zu verhindern. Bei Temperaturänderungen ändert sich das Volumen der in der Servolenkung enthaltenen Luft. Bei Erwärmung dehnen sich die Faltenbälge aus, während sie sich bei Abkühlung zusammenziehen. Erfolgt dies übermäßig, so besteht die Gefahr, dass die Faltenbälge beschädigt werden. Das Gehäuse muss folglich belüftet werden.

Nach dem Stand der Technik werden zur Belüftung gasdurchlässige und flüssigkeitsdichte Membrane eingesetzt, die in die Faltenbälge eingeformt sind. Es werden auch poröse Filterelemente eingesetzt, die in Bohrungen des Lenkungsgehäuses angeordnet sind. Diese Belüftungsvorrichtungen sollen die Passage von Luft erlauben, aber Wasser und Fremdkörper zurückhalten, da sie an dem Lenkungsgehäuse, also im Spritzwasserbereich am Fahrzeug angeordnet sind. Bei bestimmten Bedingungen, etwa beim schlagartigen Abkühlen von ca. 100°C auf 5°C. Ein solcher Vorgang kann im Automobil im Betrieb beispielsweise bei einer Wasserdurchfahrt auftreten.

Aus der DE 102 07 466 A1 ist eine Lenkung nach dem Oberbegriff des Anspruchs 1 bekannt, bei der ein Druckausgleichselement in dem Druckstück angeordnet ist.

Es zeigt sich, dass bei herkömmlichen Be- und Entlüftungssystemen eine Druckausgleichszeit von etwa 10 Minuten erforderlich ist.

Es ist deshalb Aufgabe der vorliegenden Erfindung, ein möglichst kostengünstiges und zuverlässiges System zur Be- und Entlüftung einer elektrischen Servolenkung zur Verfügung zu stellen, das einen schnelleren Druckausgleich erlaubt.

Diese Aufgabe wird von einer Servolenkung mit den Merkmalen des Anspruchs 1 gelöst.

Weil ein Schlauch an einem Ende mit dem Innenvolumen des Lenkungsgehäuses kommunizierend verbunden ist und an einem zweiten freien Ende im Betrieb oberhalb des Lenkungsgehäuses befestigt ist, insbesondere mit durchgehend freiem Durchschnitt zumindest abschnittsweise parallel mit den elektrischen Anschlussleitungen der Servolenkung aus dem Lenkungsgehäuse heraus verlegt ist, kann der Luftaustausch mit der Atmosphäre schnell über den freien Querschnitt des Schlauchs erfolgen. Die Gefahr, dass bei einer Wasserdurchfahrt während der Abkühlung Wasser eingesaugt wird, wird durch eine Verlegung im Kabelbaum minimiert. Die von dem Lenkgehäuse entfernt liegende freie Öffnung des Schlauchs kann auch frei an eine hochliegende Stelle im Fahrzeug geführt werden.

Eine solche geeignete Position ist bei vielen Kraftfahrzeugen der Einbauort des Akkumulators. Vorteilhaft ist die Servolenkung bis auf den Entlüftungsschlauch vollkommen abgedichtet, so dass auch eine Betätigung unter Wasser nicht zu einer Beeinträchtigung der Funktionsfähigkeit führt.

Zur Abscheidung von Kondenswasser aus der Lenkung oder zur Verhinderung des Einsaugens von atmosphärischem Wasser in die Lenkung ist es vorteilhaft, wenn das freie Ende des Schlauchs mit einer U-förmigen Gestaltung, beispielsweise nach Art eines Siphons versehen ist. Schließlich kann der freie Querschnitt des Schlauchs mit einem Partikelfilter versehen sein. Der Partikelfilter kann dabei mit einem besonders geringem Strömungswiderstand ausgestattet sein, beispielsweise als Vlies ausgebildet sein. Ein solcher Partikelfilter verhindert zumindest das Eindringen grober Schmutzpartikel, ohne der Entlüftung einen unerwünscht großen Widerstand entgegen zu setzen. Dies ist im Unterschied zu den am Lenkgehäuse angeordneten bekannten Filterelementen möglich, weil eine Wasserdichtigkeit hier nicht erforderlich ist.

Nachfolgend wird ein Ausführungsbeispiel der vorliegenden Erfindung anhand der Zeichnung beschrieben. Es zeigen:
- Figur 1:: Eine erfindungsgemäße elektrische Servolenkung in einer schematischen Darstellung;
- Figur 2:: Ein Diagramm, das den Druck- und Temperaturverlauf in einer herkömmlichen Servolenkung mit Entlüftung über Membrane im Faltenbalg veranschaulicht;
- Figur 3:: Ein Diagramm entsprechend Figur 2 für eine erfindungsgemäße Servolenkung.

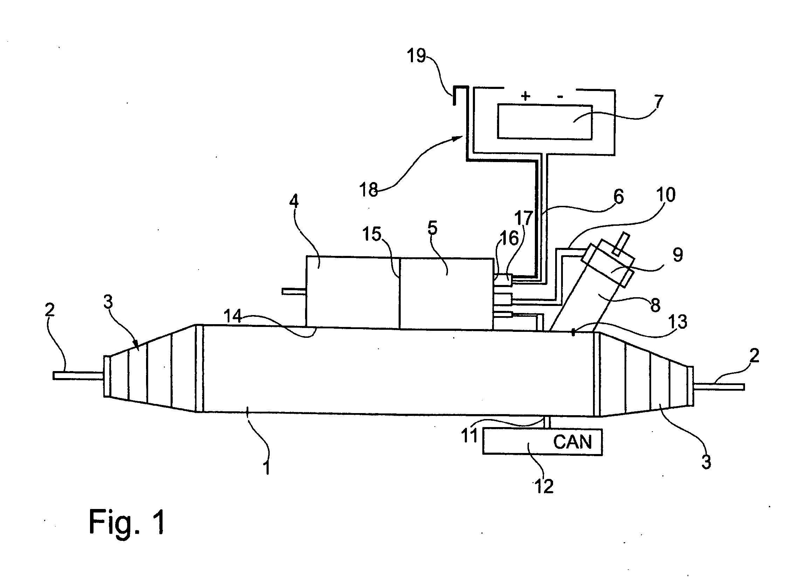

In der Figur 1 ist schematisch eine elektrische Servolenkung mit einem Lenkungsgehäuse 1 dargestellt. Das Lenkungsgehäuse 1 ist üblicherweise aus Aluminiumguss gefertigt. In dem Lenkungsgehäuse 1 ist eine Zahnstange 2 in Längsrichtung verschieblich gelagert. Die Abdichtung zwischen dem Lenkungsgehäuse 1 und der Zahnstange 2 erfolgt über 2 Faltenbälge 3, die teleskopartig dehnbar sind. Der Antrieb der elektrischen Servolenkung ist nur schematisch dargestellt. Er umfasst einen Elektromotor 4, der von einer Steuereinheit 5 angesteuert wird. Die Steuereinheit 5 ist über elektrische Leitungen 6 mit der Stromversorgung eines Kraftfahrzeugs verbunden, die als Akkumulator 7 veranschaulicht ist. Das Lenkgehäuse 1 trägt weiter ein Lenkritzelgehäuse 8, in dem auch ein Drehmomentsensor 9 angeordnet ist. Der Drehmomentsensor 9 steht ebenfalls über Leitungen 10 mit der Steuerung 5 in Verbindung. Schließlich ist die Steuerung 5 über weitere Leitungen 11 mit einem Datenbus 12 verbunden.

Das Lenkungsgehäuse 1, das Ritzelgehäuse 8 und das Motorgehäuse 4 sind jeweils über Druckausgleichskanäle 13 bzw. 14 miteinander verbunden. Ebenso ist ein Druckausgleichskanal 15 zwischen dem Elektromotor 4 und dem Gehäuse der Steuerung 5 vorgesehen. Schließlich ist ein Druckausgleichskanal 16 vorgesehen, der zwischen dem Gehäuse der Steuerung 5 und einem Verbindungsstecker 17 der Leitungen 6 angeordnet ist. Ein Schlauch 18 ist von dem Stecker 17 bis in den Bereich des Akkumulators 7 parallel zu den Leitungen 6 geführt. Der Schlauch 18 ist in der Nähe des Akkumulators 7 mit einem U-förmig ausgestalteten freien Ende 19 versehen.

Durch die Verbindungskanäle 13, 14, 15 und 16 steht der Schlauch 18 mit den einzelnen Volumina der Servolenkung kommunizierend in Verbindung. So kann ein Druckausgleich zwischen den miteinander kommunizierenden Innenvolumina des Lenkungsgehäuses 1, des Ritzelgehäuses 8, des Elektromotors 4, der Steuerung 5 und der Atmosphäre erfolgen.

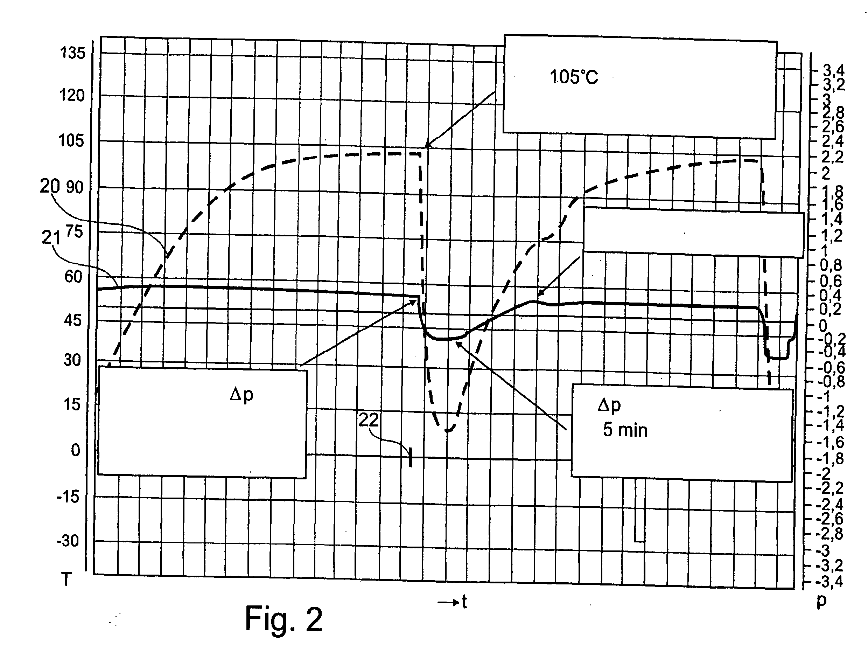

Die Figur 2 zeigt in einem Diagramm den Temperaturverlauf und den Druckverlauf in einer Simulation einer elektrischen Servolenkung. Der Versuchsaufbau sieht vor, dass ein Prüfgehäuse mit ähnlichen Eigenschaften und ähnlichem Volumen wie eine reale elektrische Servolenkung genutzt wird. Das Prüfgehäuse ist mit Druckausgleichelementen der auch in der Praxis verwendeten Bauart versehen. In der Figur 2 sind die Druckausgleichselemente die im Stand der Technik bekannten Membrane aus gasdurchlässiger PTFE-Folie.

Im Einzelnen zeigt die Figur 2 in der X-Achse die Zeit, links in der Y-Achse ist die Temperatur in °C aufgetragen. Rechts in der Y-Achse der Druck p. Eine gestrichelte Linie 20 zeigt den Temperaturverlauf des Prüfgehäuses über die Zeit. Die durchgezogene Linie 21 zeigt den Differenzdruck zur Atmosphäre, ebenfalls in Abhängigkeit von der Zeit, der im Prüfgehäuse entsteht.

Der Messvorgang erfolgt derart, dass zunächst das Prüfgehäuse entlang der Linie 20 von 5°C auf 105°C erhitzt wird. Zu einem Zeitpunkt 22 wird das Prüfgehäuse in Wasser mit der Temperatur 5°C eingetaucht. Der Druck fällt vom GleichΔp = 0 innerhalb weniger Sekunden auf einen Unterdruck von etwa -0,4 bar gegenüber dem Atmosphärendruck ab. Dieser Unterdruck baut sich erst im Verlauf von etwa 15 Minuten vollständig ab. Während dieser Zeit würden die Faltenbälge 3 in der Figur 1 durch den äußeren Druck zusammengedrückt, so dass bei Lenkbewegungen, die innerhalb des jeweiligen Faltenbalg liegenden Kugelgelenke, den Faltenbalg möglicherweise beschädigen können.

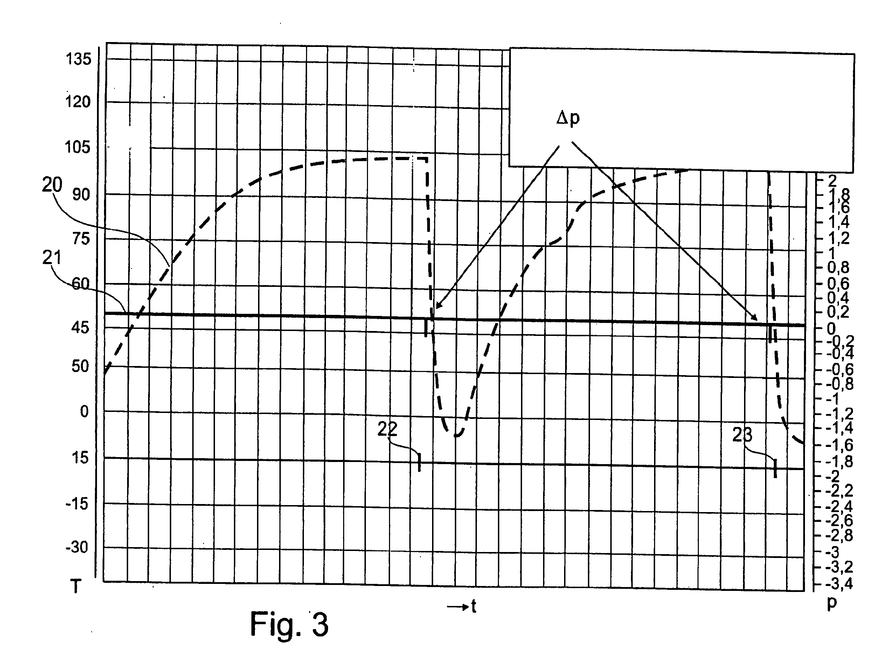

Die Figur 3 zeigt den gleichen Testvorgang wie in Figur 2, jedoch bei einem Prüfgehäuse, das mit der erfindungsgemäßen Entlüftungsvorrichtung unter Verwendung eines Schlauchs 18 ausgestattet ist. Es ist ersichtlich, dass im Zeitpunkt 22 des Versuchsablaufs ebenso wie zu einem späteren Zeitpunkt 23 bei einem weiteren Messzyklus der Druck innerhalb des Prüfgehäuses abfällt, jedoch nur bis zu einem Unterdruck von Δp = 0,2 bis 0,3 bar. Der gesamte Zeitraum, während dessen Unterdruck im Prüfgehäuse herrscht, ist in dieser Darstellung kaum auflösbar. Die Zeit, die für den Druckausgleich durch den Schlauch 18 benötigt wird, liegt weit unter einer Minute. Die mechanische Belastung des Gehäuses und der Faltenbälge wird dadurch in der Praxis minimiert. Außerdem besteht bei der erfindungsgemäßen Servolenkung weniger als beim Stand der Technik das Risiko, dass während der Zeit, in der Unterdruck herrscht, Wasser in die Lenkung gesaugt wird. Dies ist zum einen deshalb, weil die Zeitdauer und der Differenzdruck bei der erfindungsgemäßen Lösung lediglich kleiner sind als beim Stand der Technik. Und zum anderen ist das Druckausgleichselement oberhalb der Lenkung angeordnet und deshalb selbst bei einer Wasserdurchfahrt nicht direkt dem umgebenden Wasser ausgesetzt. Bei einer konkreten Ausführungsform der vorliegenden Erfindung ist vorgesehen, dass der Kunststoffschlauch 18 mit einem Innendurchmesser von 2,4 mm parallel zu den elektrischen Leitungen 6 in einem Kabelbaum angeordnet ist. Der Kabelbaum führt dann den Schlauch 18 ebenso wie die Leitungen 6 in den Bereich der elektrischen Anschlüsse, die spritzwassergeschützt oben im Motorraum des Fahrzeugs angeordnet sind. Dort endet der Schlauch 18 in seinem freien Ende 19, während die elektrischen Leitungen 6 an die Stromversorgung angeschlossen sind. Auf diese Weise kann die Lenkung bei Temperaturwechseln durch den Schlauch 18 "atmen". Der erforderliche Druckausgleich wird schnell und sicher erzielt.

Der Anschluss des Schlauchs 18 an das Innere der Lenkung kann beispielsweise über einen Durchgang innerhalb der Steckverbindung des Steckers 17 erfolgen, so dass der Schlauch 18 mit dem Stecker 17 zu Montagezwecken abgenommen und wieder angebracht werden kann.

### Bezugszeichenliste

- 1.: Lenkungsgehäuse
- 2.: Zahnstange
- 3.: Faltenbälge
- 4.: Elektromotor
- 5.: Steuereinheit
- 6.: elektrische Leitungen
- 7.: Akkumulator
- 8.: Lenkritzelgehäuse
- 9.: Drehmomentsensor
- 10.: Leitungen
- 11.: Leitungen
- 12.: Datenbus
- 13.: Druckausgleichskanal
- 14.: Druckausgleichskanal
- 15.: Druckausgleichskanal
- 16.: Druckausgleichskanal
- 17.: Verbindungsstecker
- 18.: Schlauch
- 19.: freies Ende
- 20.: Temperaturverlauf
- 21.: Druckverlauf
- 22.: Zeitpunkt
- 23.: Zeitpunkt

## Patentansprüche

1. Elektrische Servolenkung für ein Kraftfahrzeug, mit einem Lenkungsgehäuse (1), in dem ein Getriebe angeordnet ist, wobei eine in dem Gehäuse längs verschieblich gelagerte Stange (2) zur Betätigung lenkbarer Räder ein Getriebeelement ist, und wobei das Lenkungsgehäuse (1) mit wenigstens einem Faltenbalg (3) verschlossen ist, der einerseits an dem Lenkungsgehäuse (1) und andererseits an der Stange (2) befestigt ist, **dadurch gekennzeichnet, dass** ein Schlauch (18) an einem Ende mit dem Innenvolumen des Lenkungsgehäuses (1) kommunizierend verbunden ist und an einem zweiten freien Ende (19) im Betrieb in dem Kraftfahrzeug oberhalb des Lenkungsgehäuses (1) befestigt ist.

2. Servolenkung nach Anspruch 1, **dadurch gekennzeichnet, dass** der Schlauch (18) zumindest abschnittsweise parallel mit elektrischen Anschlussleitungen (6) der Servolenkung verläuft.

3. Servolenkung nach Anspruch 2, **dadurch gekennzeichnet, dass** der Schlauch (18) in einem Kabelbaum verlegt ist.

4. Servolenkung nach einem der vorhergehenden Ansprüche, **dadurch gekennzeichnet, dass** die von dem Lenkgehäuse (1) entfernt liegende freie Öffnung des Schlauchs (18) an dem Einbauort eines Akkumulators (7) des Kraftfahzeugs angeordnet ist.

5. Servolenkung nach einem der vorhergehenden Ansprüche, **dadurch gekennzeichnet, dass** das Lenkungsgehäuse (1) und alle damit kommunizierenden Volumina (4, 5, 8) bis auf die Verbindung mit dem Entlüftungsschlauch (18) vollkommen nach außen abgedichtet sind.

6. Servolenkung nach einem der vorhergehenden Ansprüche, **dadurch gekennzeichnet, dass** das freie Ende (19) des Schlauchs (18) mit einer U-förmigen Gestaltung versehen ist.

7. Servolenkung nach einem der vorhergehenden Ansprüche, **dadurch gekennzeichnet, dass** der freie Querschnitt des Schlauchs (18) mit einem Partikelfilter versehen ist.

8. Servolenkung nach einem der vorhergehenden Ansprüche, **dadurch gekennzeichnet, dass** der Partikelfilter ein Filter mit einem geringen Strömungswiderstand ist.

9. Servolenkung nach einem der vorhergehenden Ansprüche, **dadurch gekennzeichnet, dass** der Partikelfilter aus einem nicht-gewobenem Vliesmaterial gefertigt ist.

## Claims

1. Electric power steering system for a motor vehicle, having a steering housing (1), in which a gear unit is arranged, wherein a bar (2) mounted so as to be longitudinally displaceable in the housing is a gear element for actuating steerable wheels, and wherein the steering housing (1) is sealed by at least one bellows (3) which is fastened on one side to the steering housing (1) and on the other side to the bar (2), **characterised in that** a hose (18) at one end is connected communicating with the interior volume of the steering housing (1) and in operation is fastened at a second free end (19) in the motor vehicle above the steering housing (1).

2. Power steering system according to Claim 1, **characterised in that** the hose (18) runs at least in sections parallel with electric connection leads (6) of the power steering system.

3. Power steering system according to Claim 2, **characterised in that** the hose (18) is installed in a cable harness.

4. Power steering system according to any one of the preceding claims, **characterised in that** the free opening of the hose (18) located at a distance from the steering housing (1) is arranged at the installation point of a battery (7) of the motor vehicle.

5. Power steering system according to any one of the preceding claims, **characterised in that** the steering housing (1) and all volumes (4, 5, 8) communicating with it are completely sealed to the outside, except for the connection to the vent hose (18).

6. Power steering system according to any one of the preceding claims, **characterised in that** the free end (19) of the hose (18) is provided with a U-shaped design.

7. Power steering system according to any one of the preceding claims, **characterised in that** the free cross-section of the hose (18) is provided with a particle filter.

8. Power steering system according to any one of the preceding claims, **characterised in that** the particle filter is a filter with a low flow resistance.

9. Power steering system according to any one of the preceding claims, **characterised in that** the particle filter is manufactured from a non-woven fleece material.

## Revendications

1. Système de direction assistée électrique pour un véhicule automobile, comprenant un carter de direction (1) dans lequel est agencée une transmission, système dans lequel une tige (2) montée en coulissement longitudinal dans le carter pour l'actionnement de roues directrices est un élément de transmission, et
dans lequel le carter de direction (1) est fermé par au moins un soufflet (3), qui d'un côté est fixé au carter de direction (1) et de l'autre côté à la tige (2),
**caractérisé en ce qu'**un tuyau souple (18) est relié de manière communicant, par une extrémité, au volume intérieur du carter de direction (1), et, en service, est fixé, par une deuxième extrémité (19), au véhicule automobile, au-dessus du carter de direction (1).

2. Système de direction assistée selon la revendication 1, **caractérise en ce que** le tuyau souple (18) s'étend, au moins sur certains tronçons, en parallèle avec les conducteurs de raccordement électriques (6) du système de direction assistée.

3. Système de direction assistée selon la revendication 2, **caractérisé en ce que** le tuyau souple (18) est posé dans un faisceau de câble.

4. Système de direction assistée selon l'une des revendications précédentes, **caractérisé en ce que** l'ouverture libre du tuyau souple (18), se trouvant dans la position éloignée du carter de direction (1), est agencée au niveau du lieu d'implantation d'une batterie d'accumulateur (7) du véhiculé automobile.

5. Système de direction assistée selon l'une des revendications précédentes, **caractérisé en ce que** le carter de direction (1) et tous les volumes (4, 5, 8), qui communiquent avec ledit carter, sont rendus totalement étanches par rapport à l'extérieur, exception faite de la liaison avec le tuyau souple de purge d'air (18).

6. Système de direction assistée selon l'une des revendications précédentes, **caractérisé en ce que** l'extrémité libre (19) du tuyau souple (18) est dotée d'une configuration en forme de U.

7. Système de direction assistée selon l'une des revendications précédentes, **caractérisé en ce que** la section libre de passage du tuyau souple (18) est munie d'un filtre à particules.

8. Système de direction assistée selon l'une des revendication précédentes, **caractérisé en ce que** le filtre à particules est un filtre à faible résistance à l'écoulement.

9. Système de direction assistée selon l'une des revendications précédentes, **caractérisé en ce que** le filtre à particules est fabriqué en un matériau de feutre non tissé.
